# DEMANDE DE BREVET EUROPEEN

(11) **EP 2 119 366 A1**
(43) Date de publication de la demande: **18.11.2009**
(21) Numéro de dépôt: 09158954.9
(22) Date de dépôt: 28.04.2009
(51) Int. Cl.: A23C 19/09

(54) **Produit laitier**

(30) Priorité: 28.04.2008 FR 0852860
(71) Demandeur: Labelys Tracabilite, 01100 Bellignat (FR)
(72) Inventeur: Maitre, Jean-Paul, 69970, MARENNES (FR)
(74) Mandataire: Colombet, Alain André

(57) **Abrégé**

Produit fromager **caractérisé en ce qu**'il contient des granulés comprenant des protéines laitières et/ou du lactose, lesdits granulés renfermant en outre au moins un principe actif aromatique et/ou au moins un colorant et étant dispersés dans le produit fromager.

## Description

La présente invention est relative à des produits fromagers renfermant des additifs et ingrédients.

Afin d'enrichir ou de diversifier l'offre de produits fromagers, les fabricants proposent des recettes aromatisées et/ou colorées. II en est notamment ainsi dans le secteur des fromages consommés chauds, type fromage à raclette, avec l'incorporation de graines de moutarde, de poivre, d'épices diverses, d'aromates ou d'ingrédients aromatisés ou colorés.

La mise en oeuvre de ces ingrédients, notamment des épices et des aromates naturels ou encore des ingrédients aromatisés ou colorés est souvent délicate en particulier en ce qui concerne leur manipulation, leur dosage ou leur stabilité thermique ou à l'oxydation, ou du fait de la présence éventuelle d'allergènes dans le substrat aromatisant naturel et du risque de pollution croisée qui s'ensuit.

La graine de moutarde est un exemple de substrat aromatisant naturel utilisé dans des préparations fromagères. La graine de moutarde contient un allergène spécifique et son incorporation dans le produit fromager doit être déclarée sur l'emballage du produit fini. La présence des allergènes dans des préparations fromagères destinées à un large public, entraîne la nécessité de traiter séparément tous les effluents de production afin de ne pas entraîner ces allergènes au cours des différentes étapes du processus de fabrication des produits fromagers.

Certains fabricants, pour remplacer les épices et aromates naturels ou renforcer leur saveur, ajoutent un arôme naturel ou artificiel à la préparation fromagère. Mais lors du processus de fabrication, une perte de ces arômes dans les exsudats de fabrication (sérum) est observée, ce qui nécessite leur retraitement ultérieur.

L'emploi d'ingrédients, notamment d'origine naturelle, est donc une source potentielle de contamination croisée et le traitement des effluents complique les processus de production et en grève les coûts.

Un des objectifs de l'invention est d'apporter une solution permettant de remédier aux inconvénients ci-dessus exposés, qui soit parfaitement compatible avec la nature ou la composition des produits fromagers.

Elle a aussi pour objectif de proposer une solution utilisable quelle que soit la nature de l'ingrédient utilisé.

Un autre objectif encore de l'invention est de proposer une solution économiquement satisfaisante.

FR 2 104 450 décrit un produit formé de protéines de lait, en l'occurrence de caséinate de sodium, pouvant se présenter sous forme particulaire, et en particulier d'agrégats ; le produit étant caractérisé par une mouillabilité élevée et pouvant donc être aisément dispersé dans l'eau. Ce produit est plus particulièrement destiné aux produits alimentaires à dissolution ou dispersion instantanée, comme par exemple les petits déjeuners.

WO-A-02/44279 décrit des co-granulés à base de protéines et de polysaccharides et leur utilisation dans le domaine alimentaire, cosmétique ou pharmaceutique. Les protéines décrites dans la demande peuvent être végétales ou animales, et par exemple issues du lait, des oeufs, d'os ou de peaux d'animaux. Les co-granulés permettent de réduire partiellement voire totalement les matières grasses et servent d'émulsifiant, de stabilisant, d'épaississant ou de gélifiant, entrant dans la composition de plats préparés, de substituts de repas, de sauces, de desserts laitiers ou de boissons.

US 4,218,483 décrit un aliment diététique à base de caséine sous forme de granulés ayant un taux de décomposition réduit dans le tube digestif. La caséine est granulée avec de la farine de caroube. La solution exposée dans ce document prévoit la possibilité d'appliquer à la surface de ces granulés un revêtement dragéifié contenant des arômes pour rendre la consommation plus agréable.

FR 2 361 826 décrit un produit alimentaire diététique sous forme de granules comprenant un mélange de caillebotte et de caséine, les granules pouvant être enrobés en surface par des arômes. Ce produit est caractérisé par une vitesse de décomposition réduite dans le système digestif entraînant ainsi une sensation prolongée de rassasiement.

GB 1 499 984 décrit également un produit alimentaire diététique contenant pas ou peu de magnésium et comprenant une protéine de lait comme la caséine et un carbohydrate déionisé. II peut contenir également un agent aromatique ou un colorant et peut se présenter sous forme d'une poudre. Ce produit est destiné à des applications médicales et plus particulièrement à des patients souffrants d'affections cancéreuses.

FR 2 265 282 décrit un produit sous forme de noisettes de fromage, constitué de fromage dispersé dans une gangue ou une matrice d'un gel aqueux colloïdal et stabilisé par un agent de raffermissement, ce dernier étant une protéine laitière choisie parmi la caséine ou un de ses sels. Le produit peut se présenter sous forme granulaire et peut incorporer des agents de goût ou des matières colorantes afin d'augmenter la saveur ou d'améliorer l'aspect de la composition finale. Ce produit peut être conservé dans les conditions ambiantes et permet d'apporter une saveur de fromage à différents types de préparations culinaires.

CA 1 020 802 décrit une composition comprenant des particules sèches de fromage, des particules de matières grasses et un agent d'enrobage desdits particules de matières grasses, cet agent d'enrobage pouvant être une protéine de lait. La composition peut comprendre un colorant ou un agent aromatique. Cette composition permet d'apporter une saveur fromagère à des produits alimentaires comme des hamburgers ou encore des salades.

Les granulés à base de protéines laitières, notamment de caséine, n'ont jamais été proposés comme véhicule de principe actif aromatique et/ou de colorant, notamment pour incorporation dans des produits alimentaires, et plus particulièrement dans des produits fromagers.

La présente invention propose de remplacer en tout ou partie, de préférence totalement, les principes actifs ou les produits naturels (arômes et/ou colorants, sous forme d'extraits concentrés ou non, en poudre ou liquide, ou épices et autres ingrédients sous leur forme naturelle, graines de moutarde ou de poivre par exemple) par des granulés d'aromatisation et/ou coloration à base de produits dérivés du lait, notamment protéines laitières et/ou lactose, obtenus par granulation des produits dérivés du lait avec un principe actif aromatique et/ou un colorant. Les principes actifs aromatiques et les colorants peuvent être de synthèse ou d'origine naturelle. L'emploi de produits dérivés du lait pour incorporation dans un produit fromager est très avantageux sur le plan compatibilité de matières, la caséine, le lactose ou les autres dérivés du lait étant des constituants naturels du lait et des produits fromagers. L'invention permet d'obtenir des vecteurs ou véhicules d'arôme et/ou de colorant et ceux-ci peuvent en outre être conformés pour reproduire la forme et l'aspect naturels du produit substitué (par exemple graine de moutarde ou grain de poivre). Cette vectorisation apporte un certain nombre d'avantages, par exemple : protection des arômes et colorants contre l'oxydation, diminution des pertes d'arômes ou colorants lors des processus de fabrication, dosage plus facile, manipulation plus aisée, durée et conditions de conservation améliorées, notamment du fait de la nature sèche des granulés, élimination de la poussière, densité proche de celle du caillé du fromage facilitant la distribution dans le caillé, possibilité d'imiter la forme, la couleur et le goût du produit naturel, limitation des pollutions croisées dans les installations de production, ajout d'arôme complémentaire rendu superflu, maîtrise des problèmes liés aux allergènes, simplification de l'étiquetage règlementaire du produit fini.

Par ailleurs, l'encapsulation ainsi réalisée de l'arôme permet le contrôle de sa libération, au moment de la consommation du produit fromager.

La présente invention a donc pour objet un produit fromager contenant des granulés comprenant des protéines laitières et/ou du lactose, lesdits granulés renfermant en outre au moins un principe actif aromatique et/ou au moins un colorant et étant dispersés dans le produit fromager.

La présente invention a plus particulièrement pour objet un produit fromager selon l'invention dans lequel les granulés comprennent au moins 10% et notamment au moins 15% de protéines laitières et/ou lactose, par rapport au poids total; les granulés comprenant en outre un ou plusieurs auxiliaires de granulation.

La présente invention a plus particulièrement pour objet un produit fromager selon l'invention dans lequel la teneur en protéines laitières et/ou lactose des granulés est d'au moins 40%, notamment, d'au moins 50 %, en particulier d'au moins 60 %, de préférence au moins 70%, plus préférentiellement d'au moins 80% et encore plus préférentiellement d'au moins 90% en poids du poids total des granulés.

Dans un mode de réalisation, les granulés comprennent en outre un ou plusieurs auxiliaires de granulation de qualité alimentaire, e.g. agents mouillants et/ou liants et/ou agglomérants.

Par protéines laitières, on entend les protéines susceptibles d'être issues de la phase aqueuse ou de la phase colloïdale ou micellaire du lait, ou encore leurs dérivés et mélanges

Selon l'invention, les protéines laitières sont apportées par les protéines et mélanges de protéines choisis dans le groupe constitué par :
- la caséine,
- la caséine présure,
- la caséine acide,
- les caseinates,
- la poudre de lait,
- le concentré de protéines totales du lait,
- les co-précipités de protéines sériques et de caséine, seuls ou en mélange.

Suivant une forme de réalisation, les granulés comprennent de la caséine ou des caséinates. Dans un mode de réalisation préféré, la caséine ou les caséinates constituent le composant majoritaire des granulés.

La présente invention a notamment pour objet un produit fromager contenant des granulés dans lesquels la caséine ou les caséinates représentent au moins 40% en poids par rapport au poids total des protéines laitières et/ou du lactose présents dans les granulés, notamment au moins 50 %, au moins 60 % ou au moins 70 % en poids, préférentiellement au moins 80% en poids, plus préférentiellement au moins 90% en poids..

La présente invention a également pour objet un produit fromager dans lequel les granulés qui y sont dispersés comprennent du lactose. Dans un mode de réalisation selon l'invention la teneur en lactose des granulés est d'au moins 40%, notamment d'au moins 50 %, en particulier d'au moins 60 %, de préférence d'au moins 70%, plus préférentiellement au moins 80% et encore plus préférentiellement d'au moins 90% en poids par rapport au poids total des protéines laitières et/ou du lactose présents dans les granulés.

Le principe actif aromatique et/ou le colorant mis en oeuvre peuvent être naturels ou de synthèse. Ils peuvent être sous forme liquide ou solide, libres ou encapsulés.

Le principe actif aromatique contenu dans les granulés est sélectionné notamment parmi les préparations aromatiques naturelles, les arômes « identiques nature » (ou identiques naturels), les arômes artificiels ou de synthèse, les arômes de transformation, les arômes de fumée. Ces différentes catégories d'arômes sont notamment définies par la Directive 88/388/CEE.

Dans un mode de réalisation de l'invention le principe actif aromatique est un arôme « identique nature » de moutarde ou de poivre.

Le colorant est sélectionné parmi la liste des colorants alimentaires conformes à la législation européenne en vigueur ou bien à la législation du pays utilisateur des granulés.

Les granulés selon l'invention sont obtenus par les techniques classiques connues de l'homme de métier.

Suivant un premier mode de réalisation, on emploie la granulation par voie humide. Suivant une caractéristique, les protéines laitières et/ou le lactose sont mélangés à un auxiliaire ou excipient de granulation pulvérulent tel qu'un liant ou un agglomérant. Suivant une première modalité, les protéines laitières, notamment la caséine, et/ou le lactose peuvent être granulés en présence d'un additif (colorant et/ou principe actif aromatique) liquide (pur, en solution diluée ou en suspension) ou sec (pulvérulent) en présence d'un liquide de mouillage alimentaire, d'un liant alimentaire ou d'un agglomérant alimentaire. Suivant une deuxième modalité, lorsque l'additif est sous forme liquide ou en suspension dans un liquide, et que la dilution le permet, celui-ci peut remplacer en tout ou partie le liquide de mouillage, le liant ou l'agglomérant. Cette granulation par voie humide peut être réalisée au moyen des installations classiques, que sont les granulateurs rotatifs et les granulateurs oscillants. En variante, on peut utiliser la granulation en turbine ou mélangeur, la granulation par extrusion, la granulation par atomisation, ou encore la granulation par fluidisation. La granulation en lit fluidisé est préférée.

Selon un deuxième mode de réalisation, on emploie la granulation par voie sèche. Ce mode de réalisation est préféré dans le cas des additifs thermosensibles aux températures de séchage de la voie humide. Suivant une première modalité, les protéines du lait, notamment la caséine, et/ou le lactose peuvent être granulés en présence d'un additif (colorant et/ou principe actif aromatique) pulvérulent et d'un liant ou agglomérant pulvérulent. Suivant une deuxième modalité, le liant ou agglomérant sous forme pulvérulente peut être en tout ou partie remplacé par l'additif lui-même. La granulation comporte une phase de compression, et l'on peut utiliser une presse à comprimer ou une presse à cylindres. Les briquettes ou les plaques obtenues de compression sont ensuite concassées ou broyées, puis tamisées.

Les liquides de mouillage, liants et agglomérants utilisables dans le domaine alimentaire sont bien connus de l'homme du métier. On peut citer toutefois, sans vouloir être exhaustif : amidon, maltodextrines, carboxyméthylcellulose, ainsi que les corps gras, acides gras et esters d'acides gras et leurs mélanges.

Lors de l'étape de granulation, le principe actif aromatique et/ou le colorant est ajouté avec les protéines laitières et/ou le lactose et réparti de façon homogène permettant ainsi d'obtenir le granulé fini.

Le principe actif aromatique et/ou le colorant peuvent être employés sous forme sèche ou liquide, concentrée ou diluée (notamment dans une solution aqueuse, alcoolique ou huileuse), libre ou supportée sur une matrice alimentaire, notamment comprenant ou constituée de polysaccharides, de lipides ou d'acides gras, de maltodextrine, de sel, d'amidon ou de tout autre support jouant le rôle de vecteur de l'arôme (dans ce cas l'arôme est plutôt concentré) ou encore sous forme de préparation micellaire.

Dans un mode de réalisation particulier, le principe actif aromatique et/ou le colorant liquide est d'abord encapsulé dans une matrice, préférentiellement à base de microcellulose ou de polyethylène glycol, sous forme de microcapsules ou de micelles ce qui a pour avantage de protéger le principe actif de l'air, de la température ou de l'humidité. C'est alors sous cette forme encapsulée que l'additif est ensuite utilisé dans le processus de granulation qu'il soit par voie sèche ou par voie humide.

Les granulés issus de la granulation peuvent subir en plus une dragéification ou un pelliculage (« coating »), à l'aide d'un matériau alimentaire produisant un enrobage hydrophile ou hydrophobe. L'enrobage est de préférence hydrophobe pour l'incorporation à un produit fromager. Les matériaux d'enrobage peuvent être notamment : acides gras, dérivés d'acides gras, gélatines, polysaccharides, carraghénanes, gommes xanthanes, pectines, cires et leurs mélanges. A titre d'exemple, on citera l'acide stéarique ou la cire de carnauba.
Le matériau d'enrobage peut inclure un colorant. Le pelliculage ou enrobage peut être réalisé dans des turbines de dragéification, ou bien dans le même système de fluidisation que celui utilisé pour l'opération de granulation.

Cet enrobage évite la diffusion du colorant ou de l'arôme, mais surtout du colorant, vers le fromage. II peut être utilisé en outre afin de conférer aux granulés finaux les dimensions, la forme, voire la couleur et l'aspect croquant du produit naturel qu'ils sont sensés remplacer.

Les dimensions des granulés peuvent varier dans les proportions que les techniques de granulation permettent. Suivant une caractéristique avantageuse de l'invention, les dimensions peuvent concorder sensiblement avec celles du produit naturel que les granulés sont sensés remplacer.

Les dimensions moyennes des granulés (diamètre moyen) peuvent être comprises entre environ 0,5 mm et environ 5 mm, préférentiellement entre environ 2 mm et environ 4 mm, par exemple entre environ 1 mm et environ 3 mm.

L'invention a aussi pour objet les granulés décrits dans le présent exposé, leur utilisation comme additif de produit fromager et le procédé de fabrication d'un produit fromager comprenant l'addition de ces granulés.

La présente invention a également pour objet des granulés enrobés thermorésistants comprenant des protéines laitières et/ou du lactose et renfermant au moins un principe actif aromatique et/ou au moins colorant, les granulés étant enrobés d'une composition ayant un point de fusion supérieur ou égale à 60°C, notamment 70 °C, et préférentiellement 80 °C.
Cet enrobage confère une bonne résistance des granulés à la fusion lors de l'utilisation de la préparation fromagère dans un appareil à raclette par exemple et permet ainsi de conserver la forme initiale des granulés après chauffage.

L'enrobage est de préférence constitué par une ou plusieurs cires alimentaires thermorésistantes.
A titre d'exemple, la cire de Carnauba est préférentiellement citée.

Les granulés enrobés thermorésistants selon l'invention sont caractérisés par des teneurs en protéines laitières, en particulier caséine et caséinates et/ou en lactose telles que définies précédemment.

Le granulé obtenu présente ainsi une fluidité permettant de faciliter son dosage et sa mise en oeuvre dans les produits fromagers selon l'invention. II peut être ajouté soit dans le lait, soit dans le mélange caillé-sérum, plus généralement dans la phase de pré-pressage du fromage. Le mode de réalisation préféré est l'ajout dans le caillé où sa dispersion est facilitée par sa densité proche de celle du caillé.

Par produit fromager au sens de l'invention, on entend les fromages et les préparations fromagères. Les produits fromagers selon la présente invention sont notamment sélectionnés parmi les fromages à pâte fraîche, à pâte filée, à pâte molle à croute lavée, naturelle ou fleurie, à pâte à moisissures internes, à pâte pressée cuite, demi-cuite ou non cuite, à pâte fondue et les préparations fromagères. Les fromages les plus adaptés à ce type d'aromatisation sont les fromages à raclette, les fromages à fondue, les fromages de type Edam, Gouda, Mimolette, mais aussi les préparations fromagères.

La présente invention va être illustrée à travers les exemples suivants sans toutefois en limiter la portée.

### Exemple 1 : Fromage à raclette aromatisé à la moutarde :

Les granulés sont constitués d'une base caséinate, maltodextrine et carboxyméthylcellulose. L'intérieur de la granule est coloré en jaune clair au moyen d'un colorant E155. L'arôme utilisé est un arôme moutarde identique nature, dilué dans une base huile végétale. L'arôme est incorporé dans la granule à hauteur de 10% en poids.

L'extérieur de la granule est coloré en brun foncé, au moyen d'un colorant E153.
La périphérie de la granule est enrobée au moyen d'un agent filmogène hydrophobe dont le constituant majoritaire est l'acide stéarique.

Les granulés ainsi préparés sont mis en oeuvre dans un fromage de type raclette selon les conditions suivantes :

Pour 1 kg de fromage, de 4 à 5 grammes de granulés aromatisés à la moutarde sont incorporés dans le mélange caillé-sérum. Le mélange est agité, puis pompé jusqu'aux installations de pressage. En phase de pré-pressage, les granulés et la pâte forment alors un mélange homogène qui permet d'obtenir un fromage présentant une répartition équilibrée des granulés dans le produit fini.

### Exemple 2 : Fromage à raclette aromatisé à la moutarde

Les granulés sont constitués d'une base caséine acide, maltodextrine et amidon de maïs modifié. L'intérieur de la granule est coloré en jaune clair au moyen d'un colorant E155. L'arôme utilisé est un arôme moutarde identique nature, dilué dans une base huile végétale. L'arôme est incorporé dans la granule à hauteur de 10% en poids.
Les granulés sont enrobés d'une cire thermorésistante constituée majoritairement de cire de carnauba.

Les granulés ainsi préparés sont mis en oeuvre dans un fromage de type raclette selon les conditions suivantes :

Pour 1 kg de fromage, de 10 à 20 grammes de granulés aromatisés à la moutarde sont incorporés dans le mélange caillé-sérum. Le mélange est agité, puis pompé jusqu'aux installations de pressage. En phase de pré-pressage, les granulés et la pâte forment alors un mélange homogène qui permet d'obtenir un fromage présentant une répartition équilibrée des granulés dans le produit fini.

### Exemples 3-4 : granulés enrobés thermorésistants

| Ingrédients | Exemple 3 | Exemple 4 |
|---|---|---|
| Cire de Carnauba | 71 % | 40% |
| Caséine | 15% | 31 % |
| Emulsifiant base amidon | 8% | 16% |
| Arome moutarde | 5% | 10% |
| Amidon de maïs modifié | 1% | 3% |
| Colorants | <0.1 % | <0.1 % |

Les granulés sont constitués d'une base caséine, amidon de maïs modifié et émulsifiant à base amidon. L'intérieur de la granule est coloré au moyen d'un colorant. L'arôme utilisé est un arôme moutarde.
Les granulés sont enrobés de cire de carnauba.

## Revendications

1. Produit fromager **caractérisé en ce qu'**il contient des granulés comprenant des protéines laitières et/ou du lactose, lesdits granulés renfermant en outre au moins un principe actif aromatique et/ou au moins un colorant et étant dispersés dans le produit fromager.

2. Produit fromager selon la revendication 1, dans lequel la teneur en protéines laitières et/ou lactose des granulés est de 10%, notamment de 15%, en particulier de 40%, d'au moins 50 %, en particulier d'au moins 60 %, de préférence d'au moins 70%, plus préférentiellement au moins 80% et encore plus préférentiellement d'au moins 90% en poids du poids total des granulés.

3. Produit fromager selon la revendication 1 ou 2, dans lequel les protéines laitières sont apportées par les protéines ou mélanges de protéines choisis dans le groupe constitué par : la caséine, la caséine présure, la caséine acide, les caséinates, la poudre de lait, le concentré de protéines totales du lait, les co-précipités de protéines sériques et de caséines, seuls ou en mélanges.

4. Produit fromager selon l'une quelconque des revendications précédentes, dans lequel les granulés comprennent de la caséine ou des caséinates.

5. Produit fromager selon la revendication 4, dans lequel la caséine ou les caséinates représentent au moins 40% en poids, notamment au moins 50, 60 ou 70 % en poids, préférentiellement au moins 80% en poids, plus préférentiellement au moins 90% en poids, du poids total des protéines laitières et/ou du lactose présents dans les granulés.

6. Produit fromager selon l'une quelconque des revendications précédentes, dans lequel les granulés comprennent du lactose.

7. Produit fromager selon la revendication 6, dans lequel la teneur en lactose des granulés est d'au moins 40%, notamment d'au moins 50 %, en particulier d'au moins 60 %, de préférence d'au moins 70%, plus préférentiellement d'au moins 80% et encore plus préférentiellement d'au moins 90% en poids par rapport au poids total des protéines laitières et/ou du lactose présents dans les granulés.

8. Produit fromager selon l'une quelconque des revendications précédentes, dans lequel le diamètre moyen des granulés est compris entre 0,5 mm et 5 mm, notamment entre 2 mm et 4 mm, de préférence entre 1 mm et 3 mm.

9. Produit fromager selon l'une quelconque des revendications précédentes, dans lequel le principe actif aromatique et/ou le colorant est sous forme sèche ou liquide, concentrée ou diluée, libre ou supportée sur une matrice, ou microencapsulée ou sous forme de préparation micellaire.

10. Produit fromager selon l'une quelconque des revendications précédentes, dans lequel les granulés sont dragéifiés ou pelliculés.

11. Produit fromager selon la revendication précédente, dans lequel l'enrobage est hydrophile ou hydrophobe

12. Produit fromager selon les revendications 10 à 11, dans lequel les matériaux d'enrobage sont des acides gras ou leurs dérivés, des gélatines, des polysaccharides, des carraghénanes, des gommes xanthanes, des pectines, des cires ou leurs mélanges

13. Produit fromager selon les revendications 10 à 12, dans lequel le matériau d'enrobage est l'acide stéarique ou la cire de carnauba

14. Produit fromager selon l'une quelconque des revendications précédentes, sélectionné parmi les fromages à pâte fraîche, à pâte filée, à pâte molle à croute lavée, naturelle ou fleurie, à pâte à moisissures internes, à pâte pressée cuite, demi-cuite ou non cuite, à pâte fondue ou les préparations fromagères.

15. Produit fromager selon l'une quelconque des revendications précédentes, dans lequel le principe actif aromatique est un arôme de moutarde ou de poivre.
